# EUROPÄISCHE PATENTSCHRIFT

(11) **EP 0 888 553 B1**
(45) Veröffentlichungstag und Bekanntmachung des Hinweises auf die Patenterteilung: **18.09.2002**
(21) Anmeldenummer: 97908241.9
(22) Anmeldetag: 15.03.1997
(51) Int. Cl.: G01N 35/00, B08B 3/00

(54) **VORRICHTUNG ZUR REINIGUNG VON PIPETTIERNADELN ODER RÜHRERN**
DEVICE FOR CLEANING PIPETTE NEEDLES OR STIRRERS
DISPOSITIF POUR NETTOYER DES AIGUILLES A PIPETTER OU DES AGITATEURS

(30) Priorität: 18.03.1996 DE 19610607
(43) Veröffentlichungstag der Anmeldung: 07.01.1999
(60) Teilanmeldung: 02004580.3
(73) Patentinhaber: Roche Diagnostics GmbH, 68298 Mannheim (DE)
(72) Erfinder: FÜRST, Otto, D-68519 Viernheim (DE); JÄCK, Thomas, D-69198 Schriesheim (DE); WEBER, Peter, D-82418 Murnau (DE); JANSEN, Paul, D-68169 Mannheim (DE)
(86) Internationale Anmeldenummer: EP9701311
(87) Internationale Veröffentlichungsnummer: WO97035173

(56) Entgegenhaltungen:
- EP-A- 0 253 519
- EP-A- 0 725 279
- US-A- 4 495 149
- US-A- 4 552 163
- PATENT ABSTRACTS OF JAPAN vol. 12, no. 114 (P-688), 12.April 1988 & JP 62 242858 A (NIPPON TECTRON CO LTD), 23.Oktober 1987,

## Beschreibung

Die vorliegende Erfindung bezieht sich auf das Gebiet der automatisierten Analyse, bei der Flüssigkeiten mit Pipetten pipettiert werden und gegebenenfalls Flüssigkeiten mit Rührern verrührt werden.

Die vorliegende Erfindung betrifft eine Vorrichtung zur Reinigung von Pipettiernadeln oder Rührern gemäß Anspruch 1.

Im Gebiet der Analyse von Probeflüssigkeiten, wie zum Beispiel Blut oder Urin, ist es notwendig, diese Probeflüssigkeiten sowie gegebenenfalls Waschflüssigkeiten, Reagenzien usw. mit einer Pipette in Gefäße zu geben. Um eine Verschleppung zwischen aufeinanderfolgenden Proben oder Reagenzien zu vermeiden, muß die Pipette zwischen den einzelnen Pipettiervorgängen gespült werden. Falls in Analyseautomaten das Durchmischen von Flüssigkeiten notwendig ist, so wird dies in der Regel mit Rührern, die in die Probeflüssigkeit eintauchen, durchgerührt. Um eine Verschleppung von Mischgut durch einen Rührer zu vermeiden, muß dieser zwischen den einzelnen Mischvorgängen gereinigt werden. Als Mischgut kommen dabei sowohl Flüssigkeiten als auch Suspensionen, wie zum Beispiel magnetische Mikropartikel in Flüssigkeiten, in Frage.

Im Stand der Technik sind Waschvorrichtungen für Pipetten und Rührer bekannt, bei denen die zu waschenden Vorrichtungen in ein Bassingrundkörper mit Waschflüssigkeit eingetaucht werden und die Waschflüssigkeit nach ein oder mehreren Waschvorgängen ausgetauscht wird. Der Flüssigkeitsaustausch erfolgt in der Regel durch ein Absaugen der Flüssigkeit durch einen Fluidkanal,

In der europäischen Patentanmeldung 0 661 542 ist eine Vorrichtung zum Waschen von Pipetten beschrieben, bei der die Pipette durch einen Kanal geführt wird, der die Pipette in einem Abstand von 1 mm oder weniger umgibt. Für den Waschvorgang wird der Kanal mit Flüssigkeit gespült.

Dem Stand der Technik bekannte Vorrichtungen mit einem Bassingrundkörper besitzen den Nachteil, daß die Flüssigkeitszuführung und -abführung aus dem Bassingrundkörper über einen gemeinsamen Fluidkanal erfolgt und somit eine Vermischung von verbrauchter und frischer Waschflüssigkeit nicht vermieden werden kann. Weiterhin besitzen diese Vorrichtungen den Nachteil, daß sie nach einem Verdünnungsprinzip arbeiten, das heißt, daß die an der Pipette anhaftende Flüssigkeit mit der Waschflüssigkeit verdünnt wird, so daß auch nach dem Entfernen der Pipette aus dem Bassingrundkörper Flüssigkeit haften bleibt, die zu einem gewissen Prozentsatz verunreinigt ist. Bei der in EP-A-O 661 542 beschriebenen Vorrichtung wird letzteres Problem zwar vermieden, die Vorrichtung ist jedoch aufgrund der Anpassung des Kanals an den Pipettendurchmesser auf einen bestimmten Pipettentyp beschränkt. Eine Verwendung dieser Waschvorrichtung für verschiedene Pipettentypen oder wechselweise für Pipetten und Rührer ist demnach nicht möglich. Des weiteren sind Vorrichtungen bekannt, bei denen das Reinigungsverfahren mit einer automatischen Einheit gesteuert wird, die in den Patenten US 4,495,149 und US 4,552,163 offenbart werden. Bei dem Patent US 4,552,163 erfolgt die Reinigung durch Einleiten der Reinigungsflüssigkeit ins Bassininnere mittels Düsen. Die sich am Boden sammelnde gebrauchte Reinigungsflüssigkeit wird durch einen am unteren Ende des Bassingrundkörpers befindlichen Kanal abgesaugt.

Auf einem ähnlichen Prinzip basiert eine Reinigungseinheit, die im Patent (JP 62242858) offenbart wird. Hierbei wird zusätzlich zu einer Flüssigkeitseinteilung im oberen Bereich des Bassingrundkörpers Reinigungsflüssigkeit durch einen am Boden befindlichen Kanal eingeleitet, so daß aufgrund eines Gegenstroms eine verbesserte Reinigungswirkung entstehen soll. In einer weiteren Ausführung einer Reinigungskraft erfolgt das Einleiten der Waschflüssigkeit ins Bassininnere über Löcher, die an einen Flüssigkeitskanal angeschlossen sind, der durch eine Rille zwischen einem inneren und äußeren Behälter des Bassingrundkörpers gebildet wird (EP-A1 0 725 279).

Aufgabe der vorliegenden Erfindung war es, eine Vorrichtung zur Reinigung von Pipetten oder Rührern zur Verfügung zu stellen, die eine hohe Reinigungseffizienz besitzt und die die Reinigung unterschiedlicher Gegenstände, wie verschiedene Pipettentypen oder Rührer, ermöglicht. Es war weiterhin eine Aufgabe der Erfindung, eine Vorrichtung zur Verfügung zu stellen, die einen einfachen mechanischen Aufbau besitzt und leicht in bestehende Analyseautomaten bzw. Analyseautomatenkonzepte integriert werden kann.

Eine erfindungsgemäße Vorrichtung zur Reinigung von Pipetten oder Rührern besitzt ein Bassingrundkörper zur Aufnahme von Reinigungsflüssigkeit. Der Bassingrundkörper besitzt vorzugsweise im wesentlichen die Gestalt eines Hohlzylinders mit einem Innendurchmesser zwischen 0,7 und 3,5 cm. Der Zylinder kann auch eine von der Kreisform abweichende

Grundfläche aufweisen. Die Höhe des Zylinders in dem mit Waschflüssigkeit gefüllten Bereich liegt in der Größenordnung von 10 cm, sie kann jedoch abhängig von der Verwendung stark nach oben oder unten abweichen. Der Bassingrundkörper kann aus einer Reihe von Materialien, wie Metallen oder Kunststoffen, gefertigt sein, wobei letztere bevorzugt sind. Der Grundkörper ist vorzugsweise so gefertigt,
daß er stehend auf einer Unterlage befestigt werden kann. Weiterhin besitzt der Grundkörper eine Reihe von Ausnehmungen.

In seinem unteren Bereich besitzt der Bassingrundkörper eine Ausnehmung, die einem Fluidkanal zur Befüllung und/oder Entleerung des Bassingrundkörpers dient. Bevorzugt ist diese Ausnehmung an der tiefsten Stelle des Bassininnenraumes angebracht, so daß verbrauchte Waschflüssigkeit möglichst vollständig aus dem Bassingrundkörper entfernt werden kann. Dies kann beispielsweise erreicht werden, wenn der Bassinboden gekrümmt oder geneigt ist.

In seinem oberen Bereich besitzt der Bassingrundkörper eine oder mehrere Ausnehmungen für Fluidkanäle, die in eine oder mehrere Düsen einmünden. Die eine oder mehreren Düsen sind in das Bassininnere gerichtet und dienen zum Besprühen einer Pipettiernadel oder eines Rührers, der in das Bassininnere eingeführt wird. Vorzugsweise ist jede der Düsen so ausgerichtet, daß er aus ihr austretende Flüssigkeitsstrahl um 20 bis 70 °, am besten um ca. 45 °, aus der Waagerechten nach unten gerichtet ist. Es ist weiterhin von Vorteil, wenn bei Anwesenheit mehrerer Düsen diese so ausgerichtet sind, daß sich die Flüssigkeitsstrahlen in einem Punkt, vorzugsweise in der Längsachse des Bassingrundkörpers, treffen. An einer besonders bevorzugten Ausführungsform befinden sich die Düsen in einem Einsatz, der in den Bassingrundkörper eingeschraubt werden kann. Auf der Außenseite des Metalleinsatzes befindet sich eine umlaufende Nut, in der sich Bohrungen für die Düsen befinden. Wird der Metalleinsatz in den Bassingrundkörper eingeschraubt, so bildet sich aufgrund der Nut zwischen dem Grundkörper und dem Einsatz ein Zwischenraum, der über einen oder mehrere Zuläufe mit Waschflüssigkeit gespeist wird. Es hat sich als vorteilhaft herausgestellt, wenn zwei Zuläufe verwendet werden, die an gegenüberliegenden Seiten des Bassingrundkörpers angeordnet sind. Der Einsatz, der in den Bassingrundkörper geschraubt wird, kann aus einer Reihe von Materialien, wie beispielsweise Kunststoffen und Metallen, bestehen. Bevorzugt sind Metalle, insbesondere Edelstähle wie 1.4435 und 1.4305 (alte Bezeichnungen: V2A und V4A), die resistent gegen Reinigungsflüssigkeiten sind.

Vorteilhaft fiir die Funktionsweise der erfindungsgemäßen Vorrichtung ist es weiterhin, wenn im oberen Bereich des Bassingrundkörpers, unterhalb der Düsen, mindestens eine weitere Ausnehmung für einen weiteren Fluidkanal vorgesehen ist. Durch diesen Fluidkanal kann der Bassingrundkörper mit frischer Waschflüssigkeit befüllt werden. Der genannte Fluidkanal kann jedoch auch als Überlauf oder Absaugkanal verwendet werden, um die Wassersäule in dem Bassingrundkörper auf einem definierten Niveau zu halten. Dies ist insbesondere vorteilhaft, wenn die aus den Düsen austretenden Flüssigkeitsmengen nicht genau kontrolliert werden und der Flüssigkeitspegel daher nicht auf andere einfache Weise gesteuert werden kann. Ein vorbekannter Flüssigkeitsspiegel im Bassingrundkörper ist von Vorteil, weil auf eine Detektion der Flüssigkeitsoberfläche verzichtet werden kann und trotzdem ein ungewollt tiefes Eintauchen der Pipette in die Flüssigkeiten vermieden werden kann. Die Waschabläufe sind auf diese Weise auch einfacher standardisierbar.

Zur Erfindung gehört weiterhin ein System aus einer an einem Antriebsarm befestigten Pipettiernadel oder einem an einem Antriebsarm befestigten Rührer und einer erfindungsgemäßen Vorrichtung gemäß Anspruch 1 zur Reinigung von Pipettiernadeln oder Rührern. Sofern in dieser Anmeldung von Waschgut die Rede ist, sind damit sowohl Pipettiernadeln als auch Rührer gemeint. An einem Antriebsarm befestigte Pipettiernadeln oder Rührer sind in Analyseautomaten des Standes der Technik weit verbreitet, so daß an dieser Stelle keine detaillierte Beschreibung von Antriebsarmen und deren Steuerung erfolgt. Für die vorliegende Erfindung ist es jedoch wichtig, daß eine zentrale Steuereinheit vorhanden ist, die die Bewegung der Antriebsarme und die Steuerung der Fluidströme bzw. der Pumpen koordiniert regelt. Der Antriebsarm muß die Pipettiernadel oder den Rührer über die Öffnung des Bassingrundkörpers führen und das Waschgut in das Bassininnere absenken. Der Antriebsarm muß daher eine Rotations- und eine Translationsbewegung in der Vertikalen oder Translationsbewegungen in mindestens zwei Raumrichtungen durchführen können.

Mit der erfindungsgemäßen Vorrichtung kann eine Reinigung von Pipettiernadeln oder Rührern durchgeführt werden, bei der Pipettiernadel oder Rührer in das Innere des Bassingrundkörpers hineingeführt und durch mindestens eine Düse mit einer Waschflüssigkeit besprüht werden. Dabei ist es günstig, das Waschgut auf eine Höhe zu fahren, bei der sich der während des Pipettierens oder Rührens durch Flüssigkeit benetzte Bereich vollständig unterhalb des Niveaus der Düsen liegt. Andererseits ist es wenig günstig, wenn ein wesentlich größerer Bereich des Waschgutes als der vorangehend beschriebene abgeduscht wird, da in einem solchen Fall die Gefahr besteht, elektrische Kontakte oder dergleichen zu befeuchten oder aber die Wascheffizienz zu verringern. Besonders günstig ist es, wenn sich die Oberkante des oben genannten Bereiches des Waschgutes 5 bis 15 mm unterhalb des Niveaus des Düsen befindet. Vorteilhaft findet das Besprühen (Abduschen) statt, während das Waschgut aus dem Bassingrundkörper herausgezogen wird. Zusätzlich kann das Waschgut auch in eine Waschflüssigkeit, die sich im
Bassingrundkörper befindet, eingetaucht werden. Es wird so erreicht, daß Anlagerungen oder Verkrustungen, die sich am Waschgut befinden, aufgeweicht und beim späteren Abduschvorgang durch die Düse endgültig gelöst werden. Durch den Abduschvorgang wird das Waschgut während des Vorganges mit frischer Waschflüssigkeit gereinigt, so daß ein Anhaften von kontaminierter Waschflüssigkeit nach Beendigung der Reinigung vermieden werden kann, wodurch auch die Waschstation mit dieser Waschflüssigkeit gefüllt wird. Bei einer Reinigung von Pipettiernadeln ist es weiterhin vorteilhaft, eine Innenspülung in der Weise vorzunehmen, daß die Nadel in die Waschflüssigkeit im Bassingrundkörper eingetaucht und Waschflüssigkeit hindurchgeleitet wird. Durch das Eintauchen der Pipettiernadel wird eine Aerosolbildung vermieden und außerdem durch Ausbildung von Flüssigkeitswirbeln an der Nadelaußenseite eine zusätzliche Reinigung erzielt.

Vorteilhaft wird eine Pipettiernadel in die Waschflüssigkeit im Bassingrundkörper eingetaucht und mit einer Geschwindigkeit von weniger als 14 cm/sec herausgezogen, um ein vollständiges Abgleiten der Flüssigkeit, die die Nadel benetzt, unter Vermeidung von Tropfenbildung zu erreichen. Nach dem Verlassen der Flüssigkeit kann die Pipettiernadel mit höherer Geschwindigkeit bewegt werden.

Die vorangehend beschriebenen Waschprozesse für eine Pipettiernadel betreffen sowohl eine Innen- als auch eine Außenspülung. Es ist natürlich auch möglich, nur eine Innen- oder Außenspülung vorzunehmen. Insbesondere ist es vorteilhaft, bei gemeinsamer Aufnahme von zwei oder mehr verschiedenen Fluiden in eine Pipettiernadel zwischen den einzelnen Aufnahmevorgängen eine Außenspülung der Pipette vorzunehmen, um eine Verschleppung zu vermeiden oder zumindest zu reduzieren. Dies ist vor allem dann vorteilhaft, wenn analytische Untersuchungen mit Reagenzien durchgeführt werden, die ihrerseits auch als Analyt nachgewiesen werden. In solch einem Fall könnte das Reagenz bei einem ersten Test in die Probe verschleppt werden und bei einem nachfolgenden Test mit dieser Probe zu einem falsch positiven Analysenergebnis führen. Bei der gemeinsamen Aufnahme verschiedener Flüssigkeiten in eine Pipettiernadel hat es sich als günstig erwiesen, nach Aufnahme einer Flüssigkeit (z.B. Reagenz) zunächst eine Trennflüssigkeit oder eine Trennluftblase in die Pipettiemadel und dann erst eine weitere Flüssigkeit (z.B. Reagenz oder Probe) aufzunehmen.

Waschflüssigkeiten (auch bezeichnet als Reinigungsflüssigkeiten) im Sinne der Erfindung umfassen die für Analyseautomaten gängigen Flüssigkeiten und Gemische, d. h. wässrige Lösungen, denen beispielsweise Detergentien. Salze. Konservierungsmittel und ggt. such Losungsvermittler zugesetzt sind.

Eine erfindungsgemäße Vorrichtung wird anhand der folgenden Figuren genauer beschrieben
- Fig. 1:: Querschnitt einer Vorrichtung zur Reinigung von Pipettiernadeln/Rührern
- Fig. 2:: Außenansicht der Vorrichtung
- Fig. 3:: Reinigungsschritte einer Pipettiernadel
- Fig. 4:: Reinigungsschritte eines Rührers

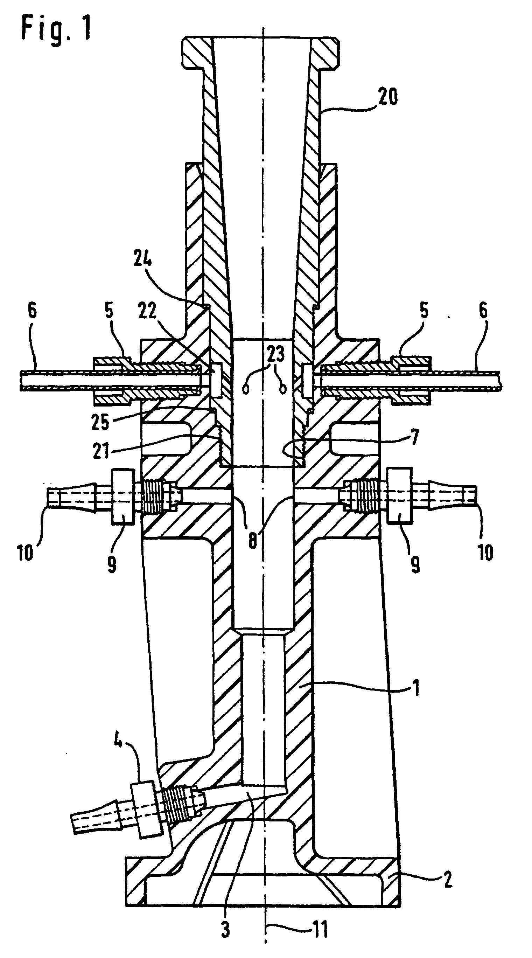

Fig. 1 zeigt einen Querschnitt parallel zur Längsachse der erfindungsgemäßen Reinigungsvorrichtung. Der Bassingrundkörper (1) besitzt an seiner Unterseite einen Standfuß (2), der eine Montage der Vorrichtung auf einer Grundplatte ermöglicht. Der Bassingrundkörper ist aus PPS (Polyphenylensulfid) gespritzt. Der Bassininnenraum besitzt eine zylindrische Gestalt, wobei ausgehend von der unteren Stirnfläche des Zylinders ein erster Fluidkanal eingelassen ist. An der Außenseite des Bassingrundkörpers befindet sich eine Verschraubung (4), die mit ihrer einen Seite in den Bassingrundkörper eingeschraubt ist und auf der anderen Seite einen Anschluß fiir einen Schlauch trägt.

Im oberen Bereich des Bassingrundkörpers befinden sich zwei gegenüberliegende Ausnehmungen, in die Flansche (5) eingeschraubt sind. In den Flanschen (5) befinden sich Schläuche (6), die mit Waschflüssigkeit gespeist werden. Der Bassingrundkörper besitzt in seinem oberen Bereich weiterhin ein Innengewinde (7), in das ein Einsatz (20) aus Stahl eingeschraubt ist. Zu diesem Zweck besitzt der Einsatz (20) in seinem unteren Bereich ein Außengewinde (21). Oberhalb dieses Gewindes befindet sich eine auf der Außenfläche des Einsatzes ringförmig umlaufende Nut (22). Zusammen mit dem Bassingrundkörper (1) bildet die Nut (22) einen Kanal für die Waschflüssigkeit, die aus den Schläuchen (6) austritt. In der Nut (22) befinden sich Bohrungen (23), die als Düsen dienen. Die in Fig. 1 dargestellte Apparatur besitzt sechs solcher Bohrungen (23), die so ausgerichtet sind, daß sich die aus ihnen austretende Flüssigkeit auf der durch den Bassingrundkörper gebildeten Zylinderachse (11) trifft. Die aus den Düsen austretende Flüssigkeit ist um ca. 45 ° gegen die Waagerechte nach unten geneigt. Zur Abdichtung des zwischen Bassingrundkörper und Einsatz (20) bestehenden Flüssigkeitskanales besitzt die Vorrichtung zwei Dichtringe (24, 25).

Die in Fig. 1 dargestellte Apparatur besitzt weiterhin zwei gegenüberliegende Ausnehmungen (8), die sich unterhalb der Düsen (23), jedoch oberhalb der Ausnehmung (3) befinden. In diesen Ausnehmungen sind wiederum Verschraubungen (9) eingeschraubt, die mit Schläuchen (10) verbunden sind. Die Schläuche (10) sind mit einer Absaugvorrichtung (nicht dargestellt) verbunden, so daß gewährleistet werden kann, daß der Flüssigkeitsspiegel im Bassingrundkörper nicht über die Höhe, in der die Ausnehmungen (8) angebracht sind, ansteigt.

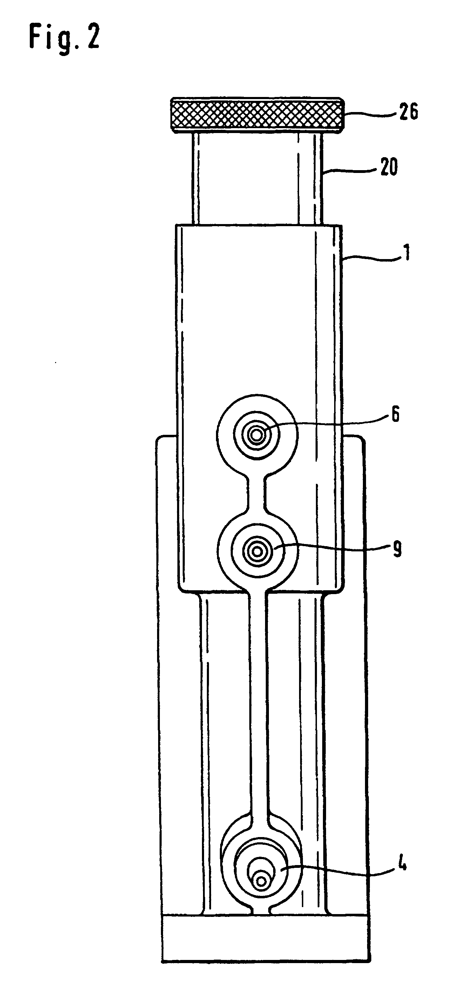

Fig. 2 zeigt die erfindungsgemäße Reinigungsvorrichtung in einer Seitenansicht. In dieser Darstellung sind insbesondere der Bassingrundkörper (1) sowie die Verschraubungen (4, 6 und 9) zu erkennen. Aus dem Bassingrundkörper ragt der eingeschraubte Einsatz (20) heraus. Der Einsatz trägt an seiner Oberkante einen an der Außenseite aufgerauhten Flansch (26), der das Handling beim Ein- und Ausschrauben des Einsatzes (20) erleichtert. Eine erfindungsgemäße Apparatur mit einschraubbarem Einsatz besitzt den Vorteil, daß sie bei herausgeschraubtem Einsatz leichter gereinigt werden kann.

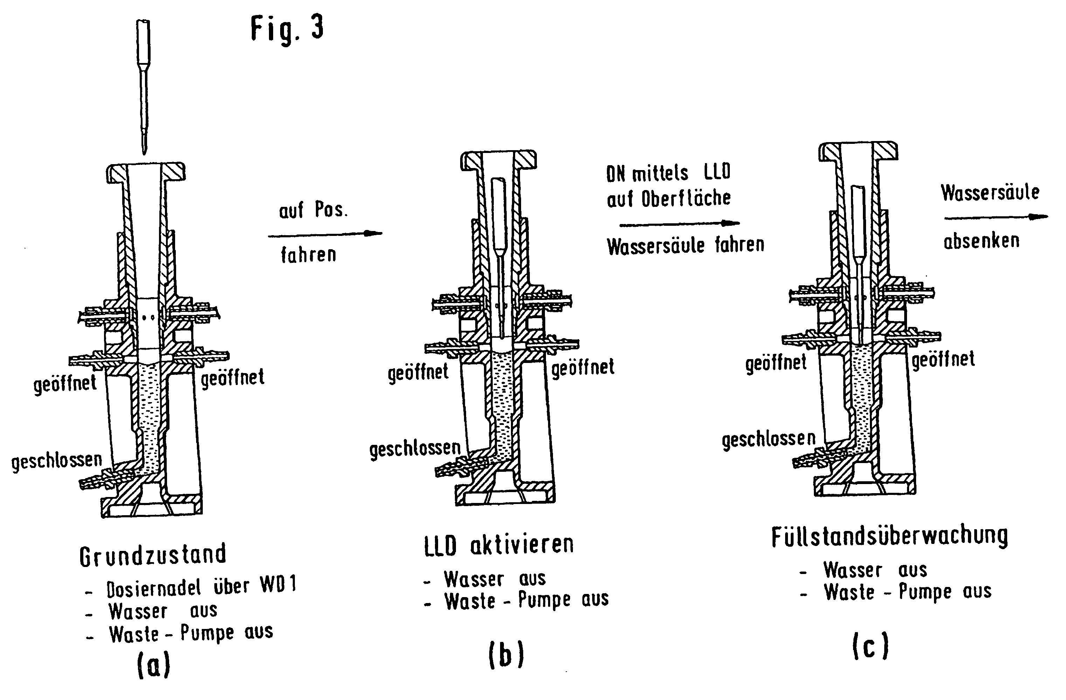

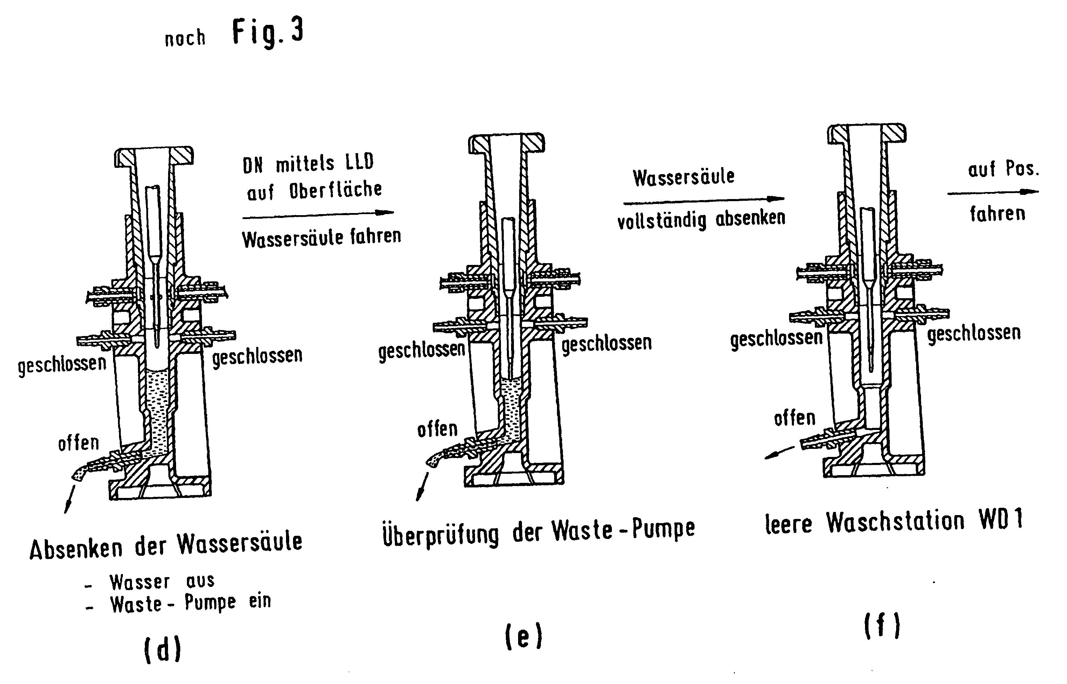

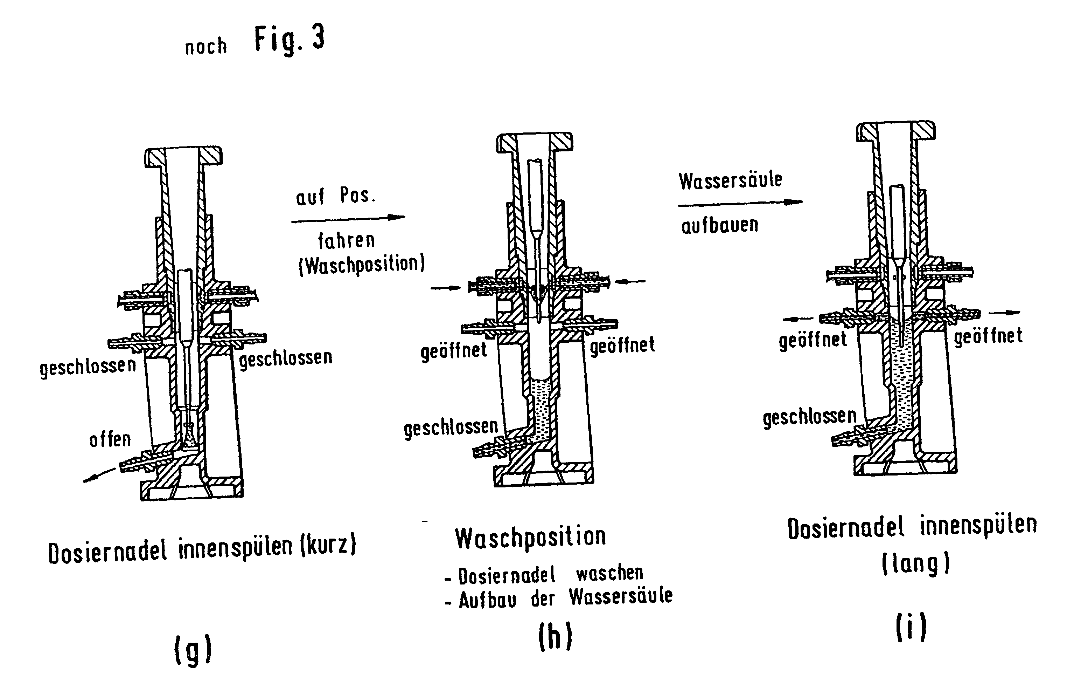

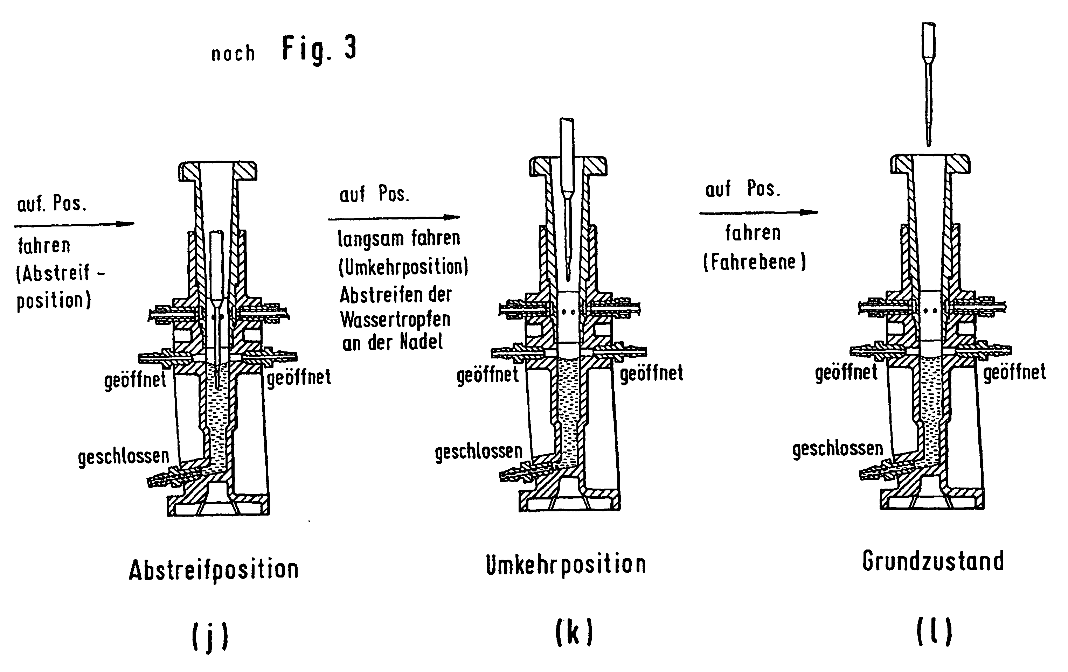

Fig. 3 zeigt die Reinigungsschritte einer Pipettiernadel, auch bezeichnet als Dosiernadel. In Schritt (a) wird die Dosiernadel über die erfindungsgemäße Reinigungsvorrichtung (in der Figur mit WD1 bezeichnet) gefahren. Zu diesem Zeitpunkt befindet sich im Bassingrundkörper der Reinigungsvorrichtung bereits Flüssigkeit von einem vorangehenden Reinigungszyklus. In Schritt (b) wird die Pipettiernadel (bezeichnet mit DN) auf die Flüssigkeitsoberfläche abgesenkt, was mittels einer elektronischen Oberflächendetektion (LLD = Liquid level detection) erfolgt. In Schritt (c) erfolgt eine Kontrolle des aufgrund der Oberflächendetektion gebundenen Füllstandes. Darauf folgend wird die Flüssigkeitssäule im Bassingrundkörper abgesenkt (Schritt (d)) und die Pipettiernadel auf die nunmehr niedrigere Flüssigkeitssäule abgesenkt (Schritt (e)). Mit dieser Vorgehensweise kann sowohl die Förder- als auch Absaugfunktion des Systems überprüft werden sowie das Vorhandensein von Flüssigkeit im Bassingrundkörper überwacht werden. Die Flüssigkeitssäule wird in Schritt (f) vollständig abgesenkt und die Pipettiemadel soweit in die Reinigungsvorrichtung abgesenkt, daß die Nadelspitze in einen verjüngten Bereich der Reinigungsvorrichtung gelangt (siehe Schritt (g)). Es erfolgt nun ein Spülen der Pipettiernadel durch Hindurchleiten frischer Waschflüssigkeit. Aufgrund der Anordnung der Pipettenspitze in dem tiefliegenden verjüngten Bereich und einer zu diesem Zeitpunkt erfolgenden Absaugung von Flüssigkeit durch den Fluidkanal an der Unterseite kann verhindert werden, daß Aerosol der Waschflüssigkeit aus der Reinigungsvorrichtung austritt und daß der obere Bereich der Waschstation durch diese Reinigungsflüssigkeit kontaminiert wird.

Nach dieser Innenspülung wird die Pipette gemäß Schritt (h) so positioniert, daß die Pipettenspitze vom Strahlenkranz der Waschflüssigkeit getroffen wird. Dabei kann die Position der Pipette über oder unter der Oberfläche der Säule der Waschflüssigkeit liegen. Durch das Abduschen der Dosiernadel füllt sich der Bassingrundkörper mit Waschflüssigkeit. Nach dem Waschen wird die Pipette ggf. geringfügig in die Waschflüssigkeit hineingefahren (siehe Schritt (i)), wobei diese Position mit der Abstreifposition (j) identisch sein kann. Es erfolgt nunmehr ein weiteres Innenspülen der Pipette durch Hindurchleiten von Flüssigkeit in den Bassingrundkörper hinein (siehe Schritt (i)). Nach dieser Spülung wird die Pipette gegebenenfalls in eine definierte Abstreifposition O gebracht und langsam aus der Waschflüssigkeit herausgezogen (Schritt (k)). Ein Herausziehen der Pipette aus der Reinigungsvorrichtung führt zurück zum Grundzustand (siehe Schritt (1)).

Sofern sich bereits Dosiergut in der Dosiernadel befindet, findet nur eine Außenspülung statt. Hierzu beginnt der Zyklus mit dem Grundzustand (a), überspringt die Schritte (b) bis (g) und fährt mit (h) fort. Das Abduschen erfolgt wie unter (h) beschrieben (Bassingrundkörper ist noch wie in (a) gefüllt). Der Schritt (i) entfällt und der Zyklus endet mit den Schritten (j),(k) und (l).

Vorteilhaft kann in diesem Ablauf am Ende von oder nach Schritt (h) die Aufnahme einer geringen Menge Flüssigkeit und/oder einer Luftblase erfolgen. Besonders günstig ist es, wenn in die Dosiernadel Flüssigkeit aus einem Tropfen aufgenommen wird, der nach dem Abduschen an der Dosiernadelspitze zurückbleibt. Auch eine Aufnahme unmittelbar an der sauberen Oberfläche der Flüssigkeit in der Waschstation ist möglich.

Die Aufnahme einer Luftblase erfolgt zweckmäßigerweise am Ende von Schritt (k) oder (l). Die als Trennflüssigkeit aufgenommene Flüssigkeitsmenge liegt normalerweise unterhalb 5 µl, vorzugsweise zwischen 1 und 3 µl. Die Aufnahme von Flüssigkeit geschieht vorzugsweise nur nach einer Reagenzaufnahme, die einer Probenaufnahme vorangeht. Gleiches gilt für die Aufnahme einer Luftblase.

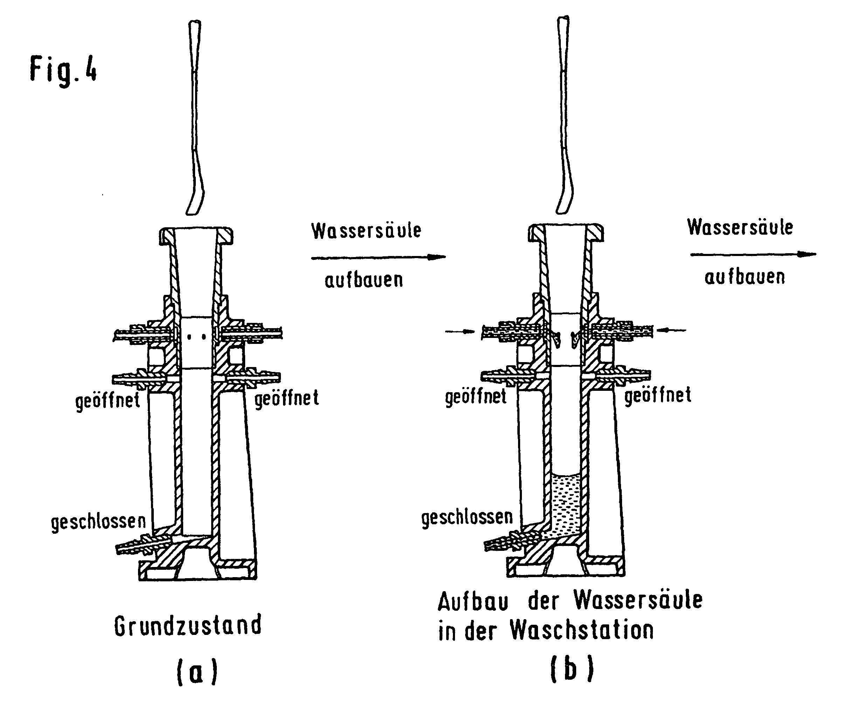

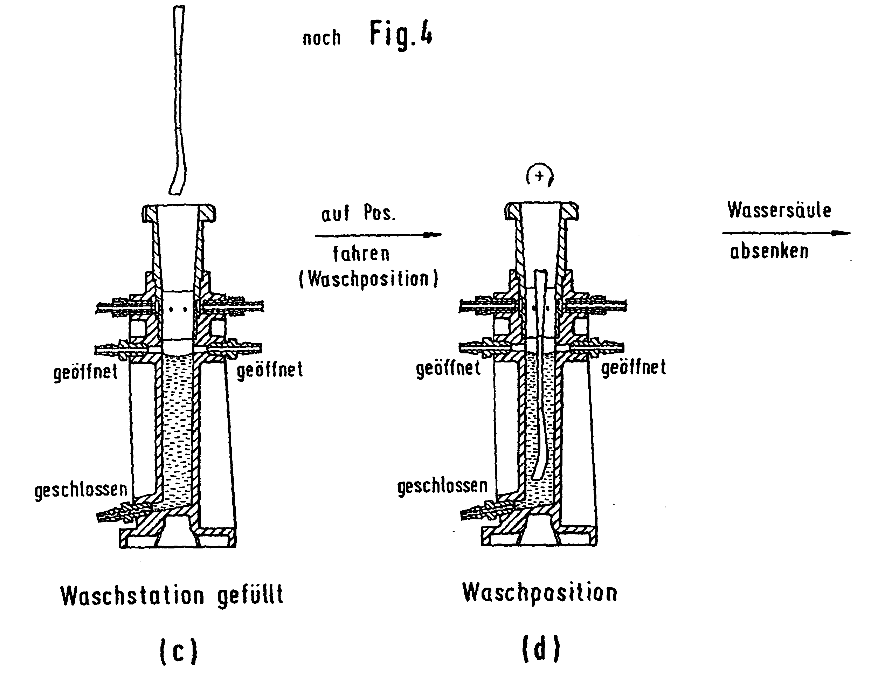

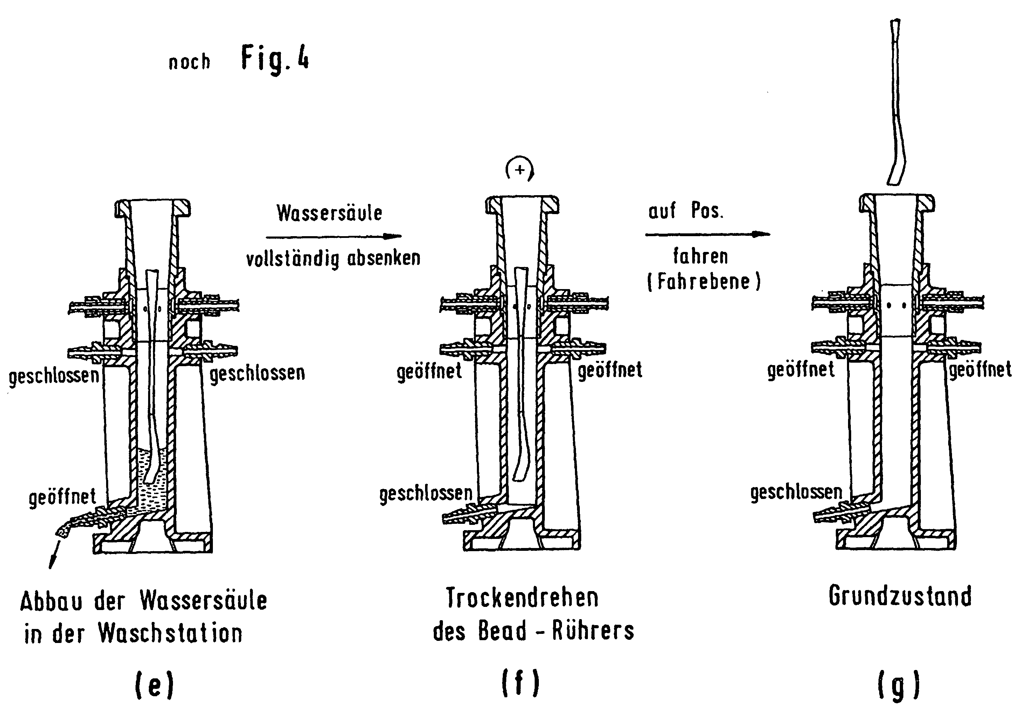

Fig. 4 zeigt die Reinigungsschritte für einen Rührer. In der Fig. 4a ist der Grundzustand der Reinigungsvorrichtung mit dem Rührer dargestellt. Es wird nunmehr eine Wassersäule aufgebaut und der Rührer in die Waschflüssigkeit eingetaucht (Fig. 4b, c und d). Durch Drehen des Rührers wird dieser gereinigt und darauf die Wassersäule abgebaut (Fig. 4e). An dem Rührer haftende Flüssigkeit wird durch ein schnelles Drehen abgeschleudert (Fig. 4f) und der Rührer darauffolgend wieder aus der Reinigungsvorrichtung herausgezogen.

### Bezugszeichenliste

- 1: Bassingrundkörper
- 2: Vorsprung
- 3: Fluidkanal
- 4: Verschraubung
- 5: Verschraubung
- 6: Schlauch
- 7: Innengewinde
- 8: Ausnehmung
- 9: Verschraubung
- 10: Schlauch
- 20: Einsatz
- 21: Außengewinde
- 22: Ringförmige Nut
- 23: Bohrungen
- 24, 25: Dichtungsringe
- 26: Aufgerauhter Flansch

## Patentansprüche

1. Vorrichtung zur Reinigung von Pipettiernadeln oder Rührern mit
- einem Bassingrundkörper zur Aufnahme von Reinigungsflüssigkeit, der in seinem unteren Bereich einen Fluidkanal zur Befüllung und/oder Entleerung sowie
- in seinem oberen Bereich mindestens einen Zulauf besitzt, auf dessen Höhe sich ein Einsatz (20) befindet und durch Zusammenwirken von Bassingrundkörper und Einsatz ein Kanal gebildet wird, in den der mindestens eine Zulauf einmündet und in dem Einsatz Düsen (23) angeordnet sind, durch die Flüssigkeit aus dem Kanal in das Bassininnere austreten kann
**dadurch gekennzeichnet, daß** der Einsatz **einschraubbar ist und** aus dem Bassingrundkörper herausragt, um ein Ein- und Ausschrauben des Einsatzes zu erleichtern.

2. Vorrichtung gemäß Anspruch 1, mit einem Einsatz, der in seiner Umfangsfläche eine Nut (22) aufweist, durch die der Kanal gebildet wird.

3. Vorrichtung gemäß Anspruch 1, **dadurch gekennzeichnet, daß** die Düsen im wesentlichen auf gemeinsamer Höhe angeordnet sind.

4. Vorrichtung gemäß Anspruch 1 oder 3, **dadurch gekennzeichnet, daß** die Düsen auf die Längsachse (11) des Bassingrundkörpers ausgerichtet sind.

5. Vorrichtung gemäß einem der Ansprüche 1 bis 4, bei dem die Düsen so ausgerichtet sind, daß ein aus ihnen austretender Flüssigkeitsstrahl im Bereich von 20 bis 70° aus der Waagerechten nach unten gerichtet ist.

6. Vorrichtung gemäß Anspruch 1, bei dem der Bassingrundkörper im oberen Bereich zwei Zuläufe an gegenüberliegenden Seiten aufweist.

7. Vorrichtung gemäß Anspruch 1, die einen weiteren Fluidkanal unterhalb der Düsen auf weist, der zum Befüllen des Bassingrundkörpers mit Waschflüssigkeit oder als Überlauf bzw. Absaugkanal dient.

8. Vorrichtung gemäß Anspruch 1, bei dem der Bassingrundkörper ein Innengewinde und der Einsatz ein Außengewinde aufweist.

9. Vorrichtung gemäß Anspruch 1, bei dem die Vorrichtung Dichtringe (24, 25) zur Abdichung des zwischen Bassingrundkörper und Einsatz bestehenden Kanals besitzt.

10. Vorrichtung gemäß Anspruch 1, bei dem der Einsatz (20 ein Metalleinsatz ist.

11. Vorrichtung gemäß Anspruch 1, bei dem der Einsatz einen aufgerauhten Flausch (26) aufweist.

## Claims

1. Device for cleaning pipetting needles or stirrers comprising
- a basic basin body for holding cleaning liquid which has a channel for fluids in its lower region for filling or/and emptying and
- has at least one inlet in its upper region at which level there is an insert (20) and a channel is formed by interaction between the basic basin body and insert into which channel the at least one inlet discharges and jets (23) are arranged in the insert through which liquid can flow from the channel into the inside of the basin
**characterized in that** the insert can be screwed in and protrudes from the basic basin body in order to facilitate the screwing or unscrewing of the insert.

2. Device as claimed in claim 1, containing an insert which has a groove (22) in its circumferential surface which forms the channel.

3. Device as claimed in claim 1, **characterized in that** the jets are essentially arranged at the same height.

4. Device as claimed in claim 1 or 3, **characterized in that** the jets are aligned along the longitudinal axis (11) of the basic basin body.

5. Device as claimed in one of the claims 1 to 4, in which the jets are aligned in such a manner that the emerging jet of liquid is directed downwards at an angle of 20 to 70° from the horizontal.

6. Device as claimed in claim 1, in which the upper region of the basic basin body has two inlets on opposite sides.

7. Device as claimed in claim 1, which has an additional fluid channel below the jets which is used to fill the basic basin body with washing liquid or serves as an overflow or suction channel.

8. Device as claimed in claim 1, in which the basic basin body has an internal thread and the insert has an external thread.

9. Device as claimed in claim 1, in which the device has sealing rings (24, 25) to seal the channel formed between the main tank body and insert.

10. Device as claimed in claim 1, in which the insert (20) is a metal insert.

11. Device as claimed in claim 1, in which the insert has a roughened finish (26).

## Revendications

1. Dispositif pour nettoyer des aiguilles de pipetage ou des agitateurs avec
- un corps de base en forme de bassine pour recevoir le liquide de nettoyage, qui possède dans sa zone inférieure un canal pour fluide destiné au remplissage et/ou vidage, ainsi que
- dans sa zone supérieure au moins une amenée, à la hauteur de laquelle se trouve une pièce rapportée (20) et un canal est formé par l'action conjointe du corps de base en forme de bassine et de la pièce rapportée, canal dans lequel débouche ladite au moins une amenée, et des buses (23) sont disposées dans la pièce rapportée, par lesquelles le liquide peut sortir du canal et entrer dans l'intérieur de la bassine,
**caractérisé en ce que** la pièce rapportée est vissable et fait saillie à partir du corps de base en forme de bassine, afin de faciliter un vissage et un dévissage de la pièce rapportée.

2. Dispositif selon la revendication 1, avec une pièce rapportée, qui dans sa surface périphérique, présente une rainure (22) par laquelle est formé le canal.

3. Dispositif selon la revendication 1, **caractérisé en ce que** les buses sont disposées essentiellement à une hauteur commune.

4. Dispositif selon la revendication 1 ou 3, **caractérisé en ce que** les buses sont orientées sur l'axe longitudinal (11) du corps de base en forme de bassine.

5. Dispositif selon l'une quelconque des revendications 1 à 4, dans lequel les buses sont alignées de telle sorte qu'un jet de liquide sortant de celles-ci est dirigé vers le bas dans la plage angulaire de 20 à 70° depuis l'horizontale.

6. Dispositif selon la revendication 1, dans lequel le corps de base en forme de bassine présente dans la zone supérieure deux amenées sur des côtés opposés.

7. Dispositif selon la revendication 1, qui présente un canal pour fluide supplémentaire, au-dessous des buses, qui sert au remplissage du corps de base en forme de bassine avec un liquide de lavage ou de trop-plein ou canal d'aspiration.

8. Dispositif selon la revendication 1, dans lequel le corps de base en forme de bassine présente un filetage interne et la pièce rapportée un filetage externe.

9. Dispositif selon la revendication 1, dans lequel le dispositif possède des bagues d'étanchéité (24, 25) pour rendre étanche le canal existant entre le corps de base en forme de bassine, et la pièce rapportée.

10. Dispositif selon la revendication 1, dans lequel la pièce rapportée (20) est une pièce rapportée métallique.

11. Dispositif selon la revendication 1, dans lequel la pièce rapportée présente une collerette rugueuse.
